# EUROPÄISCHE PATENTANMELDUNG

(11) **EP 1 941 804 A1**
(43) Veröffentlichungstag der Anmeldung: **09.07.2008**
(21) Anmeldenummer: 07405343.0
(22) Anmeldetag: 05.12.2007
(51) Int. Cl.: A23C 21/08, A23F 3/16, A23L 2/385

(54) **Getränk auf der Basis von Milchserum, Grüntee-Extrakt und nahrungsergänzenden Zusatzstoffen**

(30) Priorität: 08.01.2007 CH 102007
(71) Anmelder: Rivella International AG, 4852 Rothrist (CH)
(72) Erfinder: Rieder, Franz, 5224 Unterbözberg (CH); Kreuter, Matthias-Heinrich, Dr., 8880 Walenstadt (CH)
(74) Vertreter: Carreira-Staubli, Andrea

(57) **Zusammenfassung**

Die Erfindung betrifft ein Getränk auf der Basis von Milchserum in Kombination mit nahrungsergänzenden Zusatzstoffen sowie Geschmacksstoffen (einschliesslich Süssungsmitteln), insbesondere ein Getränk auf der Basis von Milchserum enthaltend eine Kombination von Grüntee-Extrakt und mindestens ein Vitamin der B-Komplexgruppe.

## Beschreibung

Die Erfindung betrifft ein Getränk auf der Basis von Milchserum in Kombination mit nahrungsergänzenden Zusatzstoffen sowie Geschmacksstoffen (einschliesslich Süssungsmitteln), insbesondere ein Getränk auf der Basis von Milchserum enthaltend eine Kombination von Grüntee-Extrakt und eines der B-Vitamine.

Milchserum ist eine transparente Flüssigkeit, die nach Entzug der Eiweisse und Fette aus der Milch übrig bleibt. Viele physiologisch wertvolle Inhaltsstoffe aus der Milch wie Milchzucker, Mineralstoffe, Vitamine und Spurenelemente bleiben jedoch im Milchserum erhalten. Aufgrund dieser hohen Nährstoffdichte ist Milchserum sehr wertvoll für eine gesunde und ausgewogene Ernährung und macht es für eine Verwendung z.B. in Erfrischungsgetränken und funktionellen Getränken, zu einem idealen Rohstoff. So haben sich auch bereits Getränke auf der Basis von Milchserum unter Zusatz von natürlichen Kräuter- und/oder Fruchtauszügen, und natürlichen und nicht natürlichen Süssungsmitteln auf dem Markt als wertvolle Erfrischungsgetränke durchgesetzt.

Es ist jedoch bekannt, dass die Erwartungen des Verbrauchers an Qualität und gesundheitlichen Nutzen von Lebensmitteln laufend steigen. Um diesem Bedürfnis entgegenzukommen wird einerseits vermehrt auf Verwendung von Produkten aus biologischem Anbau gesetzt, zunehmend werden jedoch Lebensmittel auch mit Zusatzstoffen mit gesundheitsförderndem Effekt versehen. Zu diesen Zusatzstoffen gehören Vitamine und Mineralstoffe, aber auch sekundäre Pflanzenstoffe. Diese sekundären Pflanzenstoffe haben pharmakologische Wirkungen und bilden eine fliessende Grenze zu den Heilmitteln, wie dies zum Beispiel bei Tee, Gewürzen und Knoblauch besonders deutlich wird. Allerdings ist deren exakte Wirkungsweise allein oder in Wechselwirkung mit Vitaminen und Mineralstoffen nicht immer bekannt.

Die grosse Gruppe innerhalb dieser sekundären Pflanzenstoffe stellen die Polyphenole dar. Extrakte von Früchten, Kräutern, Gemüse und weiteren Pflanzen mit einem hohen Gehalt an phenolischen Komponenten sind von wachsendem Interesse für die Lebensmittelindustrie, da sie eine Vielzahl physiologisch wichtiger Eigenschaften für den menschlichen Körper aufweisen und somit einen gesundheitlich positiven Effekt entfalten.

Einer der viel versprechenden Vertreter ist der Grüntee (Camellia Sinensis L.) dem man vermehrt gesundheitsfördernde Eigenschaften, wie zum Beispiel antioxidative, neuroprotektive und antiinflammatorische Wirkungen, aber auch Eigenschaften als geistiges Stimulans, insbesondere zur Steigerung der Konzentration und Förderung von Ausdauer, nachsagt, und der daher vermehrt in Form von Grüntee-Extrakt zur Herstellung von Nahrungsmitteln mit gesundheitlichem Nutzen eingesetzt wird.

Hingegen sind es auch die Polyphenole, die dem Grüntee einen bitteren Geschmack verleihen. Dieser mit steigendem gesundheitlichem Potential zunehmende extreme Bittergeschmack stellt für die Akzeptanz durch den Verbraucher ein erhebliches Hindernis dar und schränkt die Einsetzbarkeit von Grüntee massiv ein.

Innerhalb der Gruppe der Vitamine sind zur Zeit die Vitamine B6, B12 und Folsäure im Focus der Wissenschaft, da sie wichtige Funktionen für den Gewebestoffwechsel erfüllen, insbesondere auch für die Funktionstüchtigkeit des Nervensystems.

Der Erfindung liegt somit das Anliegen zugrunde, ein Getränk auf der Basis von Milchserum bereitzustellen, wobei die gesundheitsfördernden Eigenschaften des Milchserums verstärkt und durch weitere fördernde Eigenschaften bereichert werden und welches gleichzeitig erfrischenden Charakter hat.

Die Anmelderin hat nun gefunden, dass ein Getränk basierend auf Milchserum zusätzlich enthaltend eine Kombination von Grüntee-Extrakten und Vitaminen die obigen Ansprüche erfüllt, währenddem der Zusatz von Süssungsmitteln und Aromen gleichzeitig eine Reduktion der Bitterkeit und somit eine hohe sensorische Akzeptanz beim Verbraucher erzeugt.

Es wurde insbesondere gezeigt, dass eine bevorzugte Kombination umfassend Grüntee-Extrakt und mindestens ein Vitamin der B-Komplexgruppe zusammen mit hohen Anteilen an Milchserum einen synergistischen Effekt auf deren gesundheitsfördernde Wirkungsweise hat.

Die vorliegende Erfindung betrifft somit ein Getränk umfassend Milchserum, Grüntee-Extrakt und mindestens ein Vitamin der B-Komplexgruppe.

Gegebenenfalls kann mindestens ein fettlösliches und/oder weiteres wasserlösliches Vitamin zugesetzt werden.

In einem ersten pharmakologischen Testmodell entfaltete das erfindungsgemässe Getränk eine stimulierende Wirkung auf die humane neutrale Endopeptidase (NEP). Völlig überraschenderweise wurde gefunden, dass diese für Grünteeextrakte bekannte Aktivität durch das erfindungsgemässe Getränk vergleichsweise massiv stärker ausgeprägt ist, die Stimulation im Vergleich zu Grünteeextrakt durch die Kombination, zusätzlich enthaltend Milchserum und Vitamin B6, deutlich gesteigert wird.

In einem weiteren pharmakologischen Testmodell entfaltete das erfindungsgemässe Getränk eine inhibierende Wirkung auf die humane Leukozyten Elastase (HLE). Völlig überraschenderweise wurde gefunden, dass diese für Grünteeextrakte bekannte Aktivität durch das erfindungsgemässe Getränk vergleichsweise massiv stärker ausgeprägt ist, die Inhibition im Vergleich zu Grünteeextrakt durch die Kombination, zusätzlich enthaltend Milchserum und ein Vitamin der B-Komplexgruppe, insbesondere Vitamin B6, um ein Mehrfaches gesteigert wird.

Diese völlig unerwarteten Effekte lassen sich im Nachhinein dadurch erklären, dass die Kombinationspartner B-Vitamin, insbesondere Vitamin B6, Milchserum und Grünteeextrakt offensichtlich ein synergistisches System bilden, das eine über die Einzelkomponenten weit hinausgehende biologische Aktivität entfaltet und dass das erfindungsgemässe Getränk damit einen neuen und bisher nicht vorhandenen Zusatznutzen für die gesundheitsfördernde Ernährung bietet.

Zieht man in Betracht, dass die neutrale Endopeptidase (NEP) eine wichtige Rolle im Abbau von schädlichen amyloiden Plaques im menschlichen Gehirn einnimmt, so liegt nahe, dass die Stimulation der NEP einen neuroprotektiven Effekt entfaltet, der bei der Ausbildung von neurodegenerativen Erkrankungen, wie beispielsweise dem Morbus Alzheimer im präventiven Sinne nutzbar sein sollte. Zieht man weiterhin in Betracht, dass die humane Leukozyten Elastase (HLE) eine gewebedestruierende Funktion bei entzündlichen degenerativen Prozessen einnimmt, so liegt nahe, das die Inhibition der HLE einen günstigen Einfluss auf den Verlauf degenerativer und gewebedestruierender Prozesse ausüben sollte und somit der Gesunderhaltung des menschlichen Organismus dienlich ist.

Grüntee-Extrakte sind kommerziell erhältlich (beispielsweise der Grünteeextrakt EFLA®942 der Firma Frutarom Switzerland LTD.). Die üblichen Mengen liegen zwischen 0.01 und 0.5 Gew%, bevorzugt zwischen 0.01 und 0.2 Gew%.

Beispiele von Vitaminen der B-Komplexgruppe sind Vitamin B1, Vitamin B2, Vitamin B6, Vitamin B12, sowie Vitamin H (Biotin), Niacin, Pantothensäure oder Folsäure (Vitamin B9). Beispiele fettlöslicher Vitamine sind Provitamin A (beta-Carotin), Vitamin E, Vitamin K, Vitamin D. Bevorzugt sind die B-Vitamine, insbesondere Vitamin B6. Beispiele weiterer wasserlöslicher Vitamine ist Vitamin C. Die Vitamine werden dem erfindungsgemässen Getränk vorzugsweise in Pulverform oder, bei fettlöslichen Vitaminen, in einer wasserdispergierbaren Form zugefügt.

In einer besonders bevorzugten Ausführungsform enthält das erfindungsgemässe Getränk mindestens ein Vitamin der B-Komplexgruppe gegebenenfalls in Kombination mit Vitamin C.

Die üblichen Mengen betragen mindestens 15%, vorzugsweise 15 bis 30 % der empfohlenen Tagesdosen der WHO (Codex Alimentarius Guidelines on Nutrition Labelling) in 100ml des Getränkes.

Im Falle der bevorzugten Ausführungsform enthaltend mindestens ein Vitamin der B-Komplexgruppe, vorzugsweise Vitamin B1, B2, B6, B12 und/oder Folsäure ist das Vitamin B1, B2, B6 zu 0.0001 bis 0.002, vorzugsweise 0.0003 bis 0.001 Gew% enthalten, das Vitamin B12 zu 1 x 10⁻⁷ Gew% bis 10.0 x 10⁻⁷ Gew%, vorzugsweise 1.5 x 10⁻⁷ bis 5.0 x 10⁻⁷ Gew% enthalten und die Folsäure zu 0.00001 bis 0.0002, vorzugsweise 0.00003 bis 0.0001 Gew% enthalten.

Die gesundheitsfördernden Eigenschaften können zudem noch durch Zusatz von einer oder mehreren natürlichen pflanzlichen Drogen in Form von Kräuterauszügen und dergleichen verstärkt werden. Unter dem Begriff Kräuterauszug versteht man Auszüge aus allen Pflanzenteilen, einschliesslich Wurzeln, Blüten und Früchte. Diese Kräuter können z.B.

Kamille, Salbei, Rosmarin, Pfefferminze, Lemongras und/oder Melisse sein, wobei diese Aufzählung lediglich beispielhaften Charakter hat. Bedingt durch diesen Zusatz kann das erfindungsgemässe Getränk durch das jeweilige Wirkungsspektrum der hinzugefügten Droge(n) bereichert werden, wobei diese auch in günstiger Weise in Wechselwirkung mit der Funktion der Milchserum/Grüntee/B-Vitamin-Kombination treten können.

Falls erwünscht können dem erfindungsgemässen Getränk gegebenenfalls auch Mineralstoffe und/oder Spurenelemente, wie Calcium, Magnesium, Zink, Selen, Eisen, Chrom zugesetzt werden. Die Menge an den im erfindungsgemässen Getränk enthaltenen Mineralstoffen hängt von der Art des Mineralstoffs und dem Bedarf dafür ab. Die üblichen Mengen betragen mindestens 15%, vorzugsweise von 15 bis 30%, der empfohlenen Tagesdosen der WHO (Codex Alimentarius Guidelines on Nutrition Labelling) in 100ml des Getränkes.

Üblicherweise können natürliche und/oder nicht natürliche Süssungsmittel zugesetzt werden. Als weiteren gesundheitsfördernden Effekt wurde gefunden, dass durch ganzen oder teilweisen Ersatz des Kristallzuckers ein kalorienreduziertes Getränk bereitgestellt werden kann, das einen tiefen glykämischen Index, insbesondere einen glykämischen Index von < 45 aufweist und somit einen positiven Einfluss auf den Blutzuckerspiegel hat. Somit ist das erfindungsgemässe Getränk in einer bevorzugten Ausführungsform im wesentlichen frei von Saccharose.

Dem erfindungsgemässen Getränk werden demzufolge vorzugsweise nicht natürliche Süssungsmittel, wie Sucralose, Acesulfam K, Aspartam, Saccharin, Cyclamat, Neohesperidin, Thaumatin, allein oder allenfalls als Gemisch mit natürlichen Süssungsmitteln, wie zum Beispiel Zuckeraustauschstoffen zugesetzt. Beispiele von Zuckeraustauschstoffen sind z.B. verschiedene Zuckeralkohole (Sorbit, Mannit, Isomalt, Maltit, Maltitol-Sirup, Lactit, Xylit) sowie Fructose.

In einer bevorzugten Ausführungsform kann das erfindungsgemässe Getränk somit in etwa 0.002 bis 0.1 Gew%, vorzugsweise 0.005 bis 0.08 Gew% ein oder mehrere nicht natürliche Süssungsmittel, bevorzugt Sucralose enthalten, gegebenenfalls in Kombination mit einem Zuckeraustauschstoff, bevorzugt Fructose, in etwa 1.0 bis 10.0 Gew%, vorzugsweise 2.0 bis 5.0 Gew% enthalten.

Zur Verbesserung des Geschmacks und somit Erhöhung der Akzeptanz können neben den oben erwähnten Kräuterextrakten zusätzlich Malzextrakt, sowie ein oder mehrere Aromen beigesetzt werden, die gleichzeitig ebenfalls gesundheitsfördernd und stimulierend wirken und dadurch ein wertvolleres Lebensmittel schaffen können. So kann das erfindungsgemässe Getränk vorzugsweise mindestens ein Aroma, vorzugsweise eine Aromakombination mit Lemongras, enthalten. Als Aromastoffe können natürliche, naturidentische und/oder künstliche Aromastoffe verwendet werden. Vorzugsweise kommen natürliche Aromen in Betracht. Das Aroma bzw. die Aromakombination führt vorzugsweise zu einem fruchtigen oder frischen Geschmack des Getränks. Übliche Mengen der Aromen bzw. der Aromakombination betragen 0.01 bis 0.5 Gew%, vorzugsweise 0.02 bis 0.1 Gew%.

Dem erfindungsgemässen Getränk können weitere, allgemein gebräuchliche Zusatzstoffe zugesetzt werden. Diese Stoffe können beispielsweise Säuerungsmittel, wie Zitronensäure, Milchsäure, Äpfelsäure, Phosphorsäure, Stabilisatoren, wie Johannisbrotkernmehl, Pektin, Guarkernmehl, Verdickungsmittel, wie Xanthan, Alginate, Gummi arabicum, enthalten. Als bevorzugtes Säuerungsmittel wird Milchsäure eingesetzt, zum Beispiel in einer Menge von 0.1 bis 1.0 Gew%, vorzugsweise 0.3 bis 0.6 Gew%.

Der Anteil der Komponenten im erfindungsgemässen Getränk liegt vorzugsweise im Bereich von 15.0 bis 50.0 Gew% für Milchserum, von 0.01 bis 0.5 Gew. -% für Grüntee-Trockenextrakt, mindestens 15% der empfohlenen Tagesdosen der WHO (Codex Alimentarius Guidelines on Nutrition Labelling) in 100ml des Getränks für ein bevorzugtes Vitamin, von 0.002 bis 0.1 Gew% für ein nicht natürliches Süssungsmittel und von 1.0 bis 10.0 Gew% für einen gegebenenfalls zugesetzten Zuckeraustauschstoff (bezogen auf die Gesamtmenge).

Besonders bevorzugt sind Mengenanteile im Bereich von 25.0 bis 40.0 Gew% für Milchserum, von 0.01 bis 0.2 Gew% für Grüntee-Trockenextrakt, von 15 bis 30% der empfohlenen Tagesdosen der WHO (Codex Alimentarius Guidelines on Nutrition Labelling) in 100ml des Getränks für ein bevorzugtes Vitamin, von 0.005 bis 0.08 Gew% für ein nicht natürliches Süssungsmittel und von 1.0 bis 10.0 Gew% für einen gegebenenfalls zugesetzten Zuckeraustauschstoff (bezogen auf die Gesamtmenge).

Das erfindungsgemässe Getränk zeichnet sich durch gute Haltbarkeit aus und erlaubt eine Lagerung auch ohne Kühlung. So kann das Getränk problemlos an den üblichen Abgabestellen, wie z.B. in Warenhäusern gelagert werden sowie auch bei sportlichen Veranstaltungen, Wanderungen oder dergleichen bei warmen bis heissen Klimabedingungen gleichzeitig als Erfrischungs- und Regenerationsmittel eingesetzt werden. Studien haben gezeigt, dass das Getränk bei Temperaturen von ca. 20 °C mindestens 12 Monate lang in Glasflaschen und mindestens 6 Monate in PET-Flaschen ohne Qualitätsverlust gelagert werden kann.

Die vorliegende Erfindung betrifft ferner ein Verfahren zur Herstellung des erfindungsgemässen Getränkes durch Mischen der Inhaltsstoffe in vorzugsweise flüssiger Form, z.B. gelöst in Wasser, zur Erstellung eines entsprechenden Flüssigkonzentrates, Verdünnen des Flüssigkonzentrates z.B. mit Wasser und gegebenenfalls Zusetzen eines Inertgases, vorzugsweise Kohlensäure, zum Beispiel in Form von kohlesäurehaltigem Wasser, oder Stickstoff, und anschliessender Pasteurisation (i.e. kurzzeitige Erhitzung auf 60° bis 90 °C).

In einer bevorzugten Variante wurde zuerst vorgelegtes Milchserum mit Milchsäure und Grünteeextrakt, vorzugsweise in Wasser gelöst, versetzt. Zu dieser Milchserum-Mischung wurde mindestens ein Vitamin der B-Komplexgruppe und gegebenenfalls mindestens ein fettlösliches und/oder wasserlösliches Vitamin, sowie ein Süssungsmittel gelöst in Wasser zudosiert. Anschliessend wurden unter Rühren gegebenfalls weitere Zusatzstoffe, wie Zuckeraustauschstoff, Malzextrakt und Aroma zugegeben. Das so erhaltene Flüssigkonzentrat wurde mit Wasser verdünnt und gegebenenfalls mit einem Inertgas versetzt um das fertige Getränk zu erhalten, das abschliessend einer Pasteurisierung bzw. Kurzzeiterhitzung unterzogen wurde.

Das erfindungsgemässe Getränk kann neben seinem erfrischenden Charakter zum Aufbau verwendet werden, insbesondere zur Stärkung kognitiver Fähigkeiten, wie Steigerung der Konzentrationsfähigkeit und oder Regeneration bei und nach körperlichen und/oder psychischen Belastungen oder zur Rekonvaleszenz nach Krankheiten oder zur Gesunderhaltung des menschlichen Gewebes und des menschlichen Nervensystems im Sinne einer Vorbeugung allgemeiner degenerativer, insbesondere neurodegenerativer Prozesse.

Im Folgenden wird die Erfindung anhand von Ausführungsbeispielen näher erläutert, die jedoch nur exemplarischen Charakter, sowohl in Hinblick auf die biologische Aktivität, den Verwendungszweck, die verwendeten Kräuter, Zucker, als auch auf die Konzentrationsangaben haben.

### Ausführungsbeispiele:

### Beispiel 1. Kohlensäurehaltiges Milchserumgetränk

Zur Herstellung von 1000 Liter des erfindungsgemässen Getränkes wurden 350 kg Milchserum, welches mit 0.5 % Milchsäure versetzt wurde, in einen Tank vorgelegt. 500 g eines Grüntee-Trockenextraktes wurden in 25 kg Wasser von 60°C gegeben und unter Rühren vollständig aufgelöst. 3.0 g Vitamin B6, 200 g Vitamin C und 80 g Sucralose wurden in 5 kg Wasser gelöst. Diese beiden Lösungen wurden dem Milchserum zudosiert. 35 kg Flüssigfructose wurde zugegeben. Unter Rühren erfolgte die Zugabe von 2 kg Malzextrakt und 0.6 kg Aromen (Frucht- und Kräuterextrakte). Mit stark kohlensäurehaltigem Wasser wurde diese Mischung auf 1000 kg verdünnt. Dieses fertige Getränk wurde einerseits durch einen Plattenwärmetauscher während 30 Sekunden bei 90°C kurzzeiterhitzt, abgekühlt und aseptisch in PET-Flaschen gefüllt und andererseits in Glasflaschen gefüllt und die verschlossenen Flaschen durch einen Tunnelpasteur während 10 Minuten bei 78°C pasteurisiert.

### Beispiel 2. Milchserumgetränk in Karton Weichpackungen

Zur Herstellung von 1000 Liter des erfindungsgemässen Getränkes wurden 250 kg Milchserum, welches mit 0.5 % Milchsäure versetzt wurde, in einen Tank vorgelegt. 1.0 kg eines flüssigen Grüntee-Extraktes wurde zum Milchserum gegeben. 3.0 g Vitamin B6, 1.5 mg Vitamin B12 und 300 mg Folsäure wurden in wenig Wasser gelöst und ebenfalls zugegeben. Nun erfolgte die Zugabe von 85 g Sucralose und 20 kg Fructose gelöst in 40 kg Wasser. Unter Rühren erfolgte die Zugabe von 2 kg Malzextrakt und 0.6 kg Aromen (Frucht- und Kräuterextrakte). Mit Wasser wurde diese Mischung auf 1000 kg verdünnt. Das fertige Getränk wurde durch einen Plattenwärmetauscher während 30 Sekunden bei 90°C kurzzeiterhitzt, abgekühlt und aseptisch in Karton-Weichpackungen gefüllt.

### Beispiel 3. Milchserumgetränk in Glasflaschen

Zur Herstellung von 1000 Liter des erfindungsgemässen Getränkes wurden 300 kg Milchserum, welches mit 0.5 % Milchsäure versetzt wurde, in einen Tank vorgelegt. 500 g eines Grüntee-Trockenextraktes wurden in 25 kg Wasser von 60°C gegeben und unter Rühren vollständig aufgelöst. 3.0 g Vitamin B6 wurden in wenig Wasser gelöst und ebenfalls zugegeben. Nun erfolgte die Zugabe von 80 kg Flüssigfructose. Unter Rühren erfolgte die Zugabe von 0.2 kg Aromen. Mit Wasser wurde diese Mischung auf 1000 kg verdünnt. Das fertige Getränk wurde unter Stickstoffbegasung in Glasflaschen gefüllt und die verschlossenen Flaschen durch einen Tunnelpasteur während 10 Minuten bei 78°C pasteurisiert.

### Beispiel 4: Biologische Aktivität im Pharmakologischen Modell der NEP

Mit einer analog zu Beispiel 1 hergestellten Getränkemischung, reinem Grünteeextrakt und reinem Milchserum wurde ein Induktionsversuch der neutralen Endopeptidase (NEP) im pharmakologischen Modell in vitro gemäss nachfolgender Beschreibung durchgeführt (siehe auch Melzig und Janka, Phytomedicine 10: 494-498 (2000)):
Die Proben wurden für vier Tage mit den SK-N-SH Zellen (25'000 Zellen/well) in 96 well Zellkulturplatten bei 37°C und 5% CO₂ inkubiert. Das Medium mit den Proben wurde entfernt und die Reaktion mit dem SAAP-AMC Substrat (44µM final) in 50mM HEPES / 154mM NaCl, pH7.4 gestartet. Nach einer Inkubationszeit von 1 Std. bei 37°C wurde die Reaktion durch Zugabe von Phosphoramidon (5µM final) gestoppt. 85µl der Assaymischung wurden in eine neue Platte übertragen und 4µl der APN-Enzym Lösung (Verdünnung 1:235 in H₂0) wurden dazugegeben und für 60 Min bei 56°C inkubiert. Die Reaktion wurde mit 160µl 1M Essigsäure gestoppt. Als Kontrolle wurde das Lösungsmittel der Proben verwendet. Zur Bestimmung der Nullkontrollen wurde die Reaktion vor der Substrat Zugabe mit Phosphoramidon gestoppt.
Die Fluoreszenz des freigesetzten AMC wurde mit einem Spectrophotometer (TECAN, Infinite M200) gemessen (ex 367nm, em 440nm). Die Menge von AMC wurde mit einer aus mindestens fünf Punkten erhaltenen Konzentrationskurve approximiert.
Die Messwerte wurden als spezifische zelluläre NEP Aktivität in Prozent (%) unter der Berücksichtigung der Anzahl proliferierender Zellen ermittelt. Die gemessene Aktivität des Enzyms wurde für jede Konzentration durch den Proliferationskoeffizienten dividiert.

**Tabelle 1: Einfluss einzelner Zutaten und der Kombination des erfindungsgemässen Getränks analog Beispiel 1 auf die spezifische zelluläre NEP Aktivität**

| **Probe** | **Bezeichnung** | **Konz. (µg/ml)** | **spezifische zelluläre NEP Aktivität (%)** | |
|---|---|---|---|---|
| | | | **NEP** | **STABW** |
| ViP_S_Riv'06_ 1a | Getränkemischung komplett | 1000 | 128 | 1.45 |
| | | 600 | 111 | 0.59 |
| | | 300 | 105 | 0.45 |
| | | 100 | 103 | 0.18 |
| ViP_S_Riv'06_ 2a | Milchserum | 1000 | 110 | 0.86 |
| | | 600 | 104 | 0.47 |
| | | 300 | 103 | 0.09 |
| | | 100 | 98 | 0.30 |
| ViP_S_Riv'06_ 3a | Grünteeextrakt GTE (EFLA®942) | 80 | 615 | 1.44 |
| | | 60 | 419 | 2.47 |
| | | 30 | 146 | 0.88 |
| | | 10 | 116 | 0.22 |
| Kontrolle | Trinkwasser | 0 | 100 | 0.16 |

Wie aus Tabelle 1 ersichtlich induzieren die einzelnen Zutaten des erfindungsgemässen Getränks die spezifische zelluläre NEP. Berücksichtigt man, dass in 1000µg Trockensubstanz des erfindungsgemässen Getränks 4µg Grünteeextrakt enthalten sind, so wird deutlich dass die Kombination von Milchserum, Grünteeextrakt und Vitamin B6 zusammen mit den übrigen Zutaten (Getränkemischung komplett = erfindungsgemässes Getränk) eine deutlich höhere Induktion des Enzyms bewirken (1000µg/ml bewirken eine Induktion auf 128%), als das durch Grünteeextrakt in diesem Konzentrationsbereich der Fall ist (selbst 10µg/ml bewirken lediglich eine Induktion auf 116%). Das Gleiche gilt für Milchserum (Induktion bei 600µg/ml auf 104%) unter Berücksichtigung des Mengenanteils im erfindungsgemässen Getränk.

### Beispiel 5. Biologische Aktivität im Pharmakologischen Modell der HLE

Mit einer analog zu Beispiel 1 hergestellten Getränkemischung, reinem Grünteeextrakt und reinem Milchserum wurde ein Inhibitionsversuch der humanen Leukozyten Elastase (HLE) im pharmakologischen Modell in vitro gemäss nachfolgender Beschreibung durchgeführt (siehe auch Safayhi et al, J.Pharmacol. Exp. Ther. 281: 460-463 (1997)):
Nach Vorinkubation der HLE (20nM) bei Raumtemperatur für 10 min, wurde die Reaktion durch Zugabe von Elastasesubstrat (0.5 mM) gestartet und für 15 min bei Raumtemperatur inkubiert. Die Reaktion wurde mit Essigsäure gestoppt.
Der Einfluss verschiedener Konzentrationen von Proben oder Referenzsubstanzen auf die Aktivität der Enzyme HLE wurde anhand der produzierten Menge von p-Nitroanilin gemessen.
Die Bestimmung des p-Nitroanilins erfolgte direkt photometrisch. Die optische Dichte wurde bei einer Wellenlänge von 415 nm bestimmt; die Menge von p-Nitroanilin wurde mit einer aus mindestens fünf p-Nitroanilin Standards erhaltenen Konzentrationskurve approximiert.
Die dosisabhängige Reduktion der Enzymaktivität unter Einwirkung der jeweiligen Probe oder Referenzsubstanz ist ausgedrückt in einer prozentualen Dosis-Wirkungsbeziehung. Die IC₅₀-Werte (Probenkonzentration, die eine 50 % Inhibition der maximalen Enzymaktivität bewirkt) wurden mit dem Programm Prism (GraphPad, Inc.) ermittelt (siehe Tabelle 2).

**Tabelle 2 : Einfluss einzelner Zutaten und der Kombination des erfindungsgemässen Getränks analog Beispiel 1 auf die HLE Aktivität**

| **Probe** | **Bezeichnung** | **Konz. (µg/ml)** | **HLE Aktivität (%)** | **Fehler** |
|---|---|---|---|---|
| ViP_S_Riv'06_ 1a | Getränkemischung Komplett | 1500 | 37 | 1 |
| | | 1000 | 50 | 1 |
| | | 300 | 80 | 6 |
| | | 100 | 94 | 1 |
| ViP_S_Riv'06_ 2a | Milchserum | 1500 | 97 | 3 |
| | | 1000 | 106 | 6 |
| | | 300 | 114 | 8 |
| | | 100 | 111 | 3 |
| ViP_S_Riv'06_ 3a | Grünteeextrakt GTE (EFLA®942) | 30 | 47 | 8 |
| | | 10 | 77 | 2 |
| | | 3 | 98 | 4 |
| | | | | |
| Kontrolle | Trinkwasser | 0 | 100 | 7 |

Wie aus Tabelle 2 ersichtlich inhibieren die einzelnen Zutaten des erfindungsgemässen Getränks die humane Leukozyten Elastase HLE. Berücksichtigt man, dass in 1500µg Trockensubstanz des erfindungsgemässen Getränks 6µg Grünteeextrakt enthalten sind, so wird deutlich dass die Kombination von Milchserum, Grünteeextrakt und Vitamin B6 zusammen mit den übrigen Zutaten (Getränkemischung komplett = erfindungsgemässes Getränk) eine deutlich höhere Inhibition des Enzyms bewirken (1500µg/ml bewirken eine Inhibition auf 37%), als das durch Grünteeextrakt in diesem Konzentrationsbereich der Fall ist (selbst 10µg/ml bewirken lediglich eine Inhibition auf 77%). Das Gleiche gilt für Milchserum (keine alleinige Inhibition bis 1000µg/ml) unter Berücksichtigung des Mengenanteils im erfindungsgemässen Getränk.

## Patentansprüche

1. Getränk umfassend Milchserum, Grüntee-Extrakt und mindestens ein Vitamin der B-Komplexgruppe.

2. Getränk nach Anspruch 1, **dadurch gekennzeichnet, dass** das mindestens eine Vitamin der B-Komplexgruppe ein oder mehrere Vitamine ausgesucht aus Vitamin B1, Vitamin B2, Vitamin B6, Vitamin B12, Vitamin H (Biotin), Niacin, Pantothensäure oder Folsäure ist.

3. Getränk nach Anspruch 1, **dadurch gekennzeichnet, dass** das mindestens eine Vitamin der B-Komplexgruppe Vitamin B6 ist.

4. Getränk nach einem der vorangehenden Ansprüche ferner umfassend mindestens ein fettlösliches und/oder wasserlösliches Vitamin.

5. Getränk nach Anspruch 4 **dadurch gekennzeichnet, dass** das mindestens eine fettlösliche Vitamin ein oder mehrere Vitamine ausgesucht aus Provitamin A (beta-Carotin), Vitamin E, Vitamin K und Vitamin D ist.

6. Getränk nach Anspruch 4 oder 5 **dadurch gekennzeichnet, dass** das mindestens eine wasserlösliche Vitamin Vitamin C ist

7. Getränk nach einem der vorangehenden Ansprüche im Wesentlichen frei von Saccharose.

8. Getränk nach einem der vorangehenden Ansprüche, **dadurch gekennzeichnet, dass** das Milchserum zu 15 bis 50 Gew% enthalten ist.

9. Getränk nach einem der vorangehenden Ansprüche, **dadurch gekennzeichnet, dass** der Grünteeextrakt ein Trockenextrakt ist und zu 0.01 bis 0.5 Gew% enthalten ist.

10. Getränk nach einem der vorangehenden Ansprüche, **dadurch gekennzeichnet, dass** das mindestens eine Vitamin der B-Komplexgruppe zu mindestens 15 % der empfohlenen Tagesdosen der WHO (Codex Alimentarius Guidelines on Nutrition Labelling) in 100 ml des Getränkes enthalten sind.

11. Getränk nach einem der Ansprüche 4 bis 10, **dadurch gekennzeichnet, dass** das mindestens eine fettlösliche und/oder wasserlösliche Vitamin zu mindestens 15 % der empfohlenen Tagesdosen der WHO (Codex Alimentarius Guidelines on Nutrition Labelling) in 100 ml des Getränkes enthalten sind.

12. Getränk nach einem der vorangehenden Ansprüche ferner umfassend mindestens ein nicht natürliches Süssungsmittel, vorzugsweise Sucralose.

13. Getränk nach Anspruch 12 **dadurch gekennzeichnet, dass** das nicht natürliche Süssungsmittel zu 0.002 bis 0.1 Gew% enthalten ist.

14. Getränk nach einem der vorangehenden Ansprüche ferner umfassend mindestens einen Zuckeraustauschstoff.

15. Getränk nach Anspruch 14 **dadurch gekennzeichnet, dass** als Zuckeraustauschstoff Fructose enthalten ist.

16. Getränk nach Anspruch 14 oder 15, **dadurch gekennzeichnet, dass** der Zuckeraustauschstoff zu 1.0 bis 10 Gew% enthalten ist.

17. Getränk nach einem der vorangehenden Ansprüche umfassend 15 bis 50 Gew% Milchserum, 0.01 bis 0.5 Gew% Grüntee-Trockenextrakt und mindestens 15% der empfohlenen Tagesdosen der WHO (Codex Alimentarius Guidelines on Nutrition Labelling) mindestens eines Vitamins der B-Komplexgruppe in 100ml, jeweils bezogen auf die Gesamtmenge des Getränkes.

18. Getränk nach einem der vorangehenden Ansprüche umfassend 15 bis 50 Gew% Milchserum, 0.01 bis 0.2 Gew% Grüntee-Trockenextrakt und 0.0003 bis 0.001 Gew% Vitamin B6, jeweils bezogen auf die Gesamtmenge des Getränkes.

19. Getränk nach Anspruch 17 oder 18 ferner umfassend mindestens 15% der empfohlenen Tagesdosen der WHO (Codex Alimentarius Guidelines on Nutrition Labelling) mindestens eines fettlöslichen und/oder wasserlöslichen Vitamins.

20. Getränk nach einem der Ansprüche 17 bis 19 ferner umfassend 0.002 bis 0.1, vorzugsweise 0.005 bis 0.08 Gew% Sucralose

21. Getränk nach einem der Ansprüche 17 bis 20 ferner umfassend 1.0 bis 10 Gew% Fructose

22. Getränk nach einem der vorangehenden Ansprüche ferner umfassend mindestens ein Aroma, vorzugsweise Lemongras

23. Getränk nach einem der vorangehenden Ansprüche ferner umfassend weitere Zusatzstoffe, wie Säuerungsmittel, Stabilisatoren und Verdickungsmittel,

24. Getränk nach Anspruch 23, worin das Säuerungsmittel Zitronensäure, Milchsäure, Äpfelsäure oder Phosphorsäure, vorzugsweise Milchsäure ist.

25. Getränk nach einem der vorangehenden Ansprüche umfassend 15 bis 50 Gew% Milchserum, 0.01 bis 0.2 Gew% Grüntee-Trockenextrakt, 0.0003 bis 0.001 Gew% Vitamin B6, 0.002 bis 0.1, Gew% Sucralose, 1 bis 10 Gew% Fructose und 0,01 bis 0,1 Gew% Vitamin C, jeweils bezogen auf die Gesamtmenge des Getränkes.

26. Getränk nach einem der vorangehenden Ansprüche umfassend 15 bis 50 Gew% Milchserum, 0.01 bis 0.2 Gew% Grüntee-Trockenextrakt, 0.0003 bis 0.001 Gew% Vitamin B6, 1 x 10-⁷ bis 10 x 10⁻⁷ Gew% Vitamin B12, 0.00001 bis 0.0002 Gew% Folsäure, 0.002 bis 0.1, Gew% Sucralose und 1.0 bis 10.0 Gew% Fructose, jeweils bezogen auf die Gesamtmenge des Getränkes.

27. Getränk nach einem der vorangehenden Ansprüche, **dadurch gekennzeichnet, dass** dem Getränk ein Inertgas, vorzugsweise Kohlensäure oder Stickstoff zugesetzt ist.

28. Getränk gemäss einem der vorangehenden Ansprüche zur Erfrischung und/oder zur Stärkung kognitiver Fähigkeiten.

29. Getränk gemäss einem der vorangehenden Ansprüche zur Gesunderhaltung des menschlichen Gewebes und des menschlichen Nervensystems.

30. Getränk nach einem der vorangehenden Ansprüche, **dadurch gekennzeichnet, dass** das Getränk die Aktivität der neutralen Endopeptidase (NEP) menschlicher Nervenzellen anregt und die humane Leukozyten Elastase (HLE) hemmt.

31. Getränk nach einem der vorangehenden Ansprüche **dadurch gekennzeichnet, dass** das Getränk einen glykämischen Index von < 45 aufweist.

32. Konzentrat umfassend Milchserum, Grüntee-Trockenextrakt, Vitamin B6, Sucralose, Fructose und eine Aromenkombination umfassend Lemongras, zur Herstellung eines Getränkes gemäss einem der vorangehenden Ansprüche.

33. Verfahren zur Herstellung eines Getränks gemäss einem der Ansprüche 1 bis 31 umfassend die Schritte Mischen der Inhaltsstoffe zur Erstellung eines Flüssigkonzentrates, Verdünnen des Flüssigkonzentrates und gegebenfalls Versetzen mit einem Inertgas, vorzugsweise Kohlensäure oder Stickstoff, und Haltbarmachung durch Pasteurisation.
